# EUROPEAN PATENT SPECIFICATION

(11) **EP 3 915 808 B1**
(45) Date of publication and mention of the grant of the patent: **31.01.2024**
(21) Application number: 21172814.2
(22) Date of filing: 07.05.2021
(51) Int. Cl.: B60C 1/00, C08C 19/22, C08C 19/25, C08C 19/44, C08L 15/00

(54) **FUNCTIONALIZED INITIATOR, METHOD OF MAKING AN INITIATOR AND FUNCTIONALIZED ELASTOMER**
FUNKTIONALISIERTER INITIATOR, VERFAHREN ZUR HERSTELLUNG EINES INITIATORS UND FUNKTIONALISIERTES ELASTOMER
INITIATEUR FONCTIONNALISÉ, PROCÉDÉ DE FABRICATION D'UN INITIATEUR ET ÉLASTOMÈRE FONCTIONNALISÉ

(30) Priority: 14.05.2020 US 202015931647
(43) Date of publication of application: 01.12.2021
(73) Proprietor: The Goodyear Tire & Rubber Company, Akron, OH 44316 (US)
(72) Inventor: ENSIGN, Seth Cody, Akron, 44333 (US); MURRAY, Aaron Patrick, Chardon, 44024 (US)
(74) Representative: Kutsch, Bernd

(56) References cited:
- EP-A2- 3 567 074
- US-A1- 2004 063 884
- Sleevi Marc ET AL: "Metalation-Carboxylation of p- and m-(Trimethylsily)toluenes as a Convenient Route to [p- and m-(Trimethylsilyl)phenyl]acetic Acids", J. Org. Chem. United States National Institutes of Health, 1 January 1980 (1980-01-01), pages 5204-5206, XP55848591, Retrieved from the Internet: URL:https://pubs.acs.org/doi/pdf/10.1021/j o01313a036 [retrieved on 2021-10-06]
- ISHIZONE TAKASHI ET AL: "Anionic polymerization of monomers containing functional groups. 4. Anionic living polymerization of N,N-dialkyl-4-vinylbenzenesulfonamides", MACROMOLECULES, vol. 25, no. 19, 1 September 1992 (1992-09-01), pages 4840-4847, XP55846609, US ISSN: 0024-9297, DOI: 10.1021/ma00045a002
- MOTOYASU KOBAYASHI ET AL: "stereospecific anionic polymerization of N,N-dialkylacrylamides", MACROMOLECULES, AMERICAN CHEMICAL SOCIETY, US, vol. 32, 1 January 1999 (1999-01-01), pages 6466-6477, XP002244802, ISSN: 0024-9297, DOI: 10.1021/MA990812J
- ISHIZONE T ET AL: "ANIONIC POLYMERIZATIONS OF 1-ADAMANTYL METHACRYLATE AND 3-METHACRYLOYLOXY-1,1'-BIADAMANTANE", MACROMOLECULAR CHEMISTRY AND PHYSICS, WILEY-VCH VERLAG, WEINHEIM, DE, vol. 203, no. 16, 12 December 2002 (2002-12-12), pages 2375-2384, XP001190765, ISSN: 1022-1352, DOI: 10.1002/MACP.200290018

## Description

### Background

In recent years, there is a growing demand for functionalized polymers. Functionalized polymers can be synthesized through various living/controlled polymerization techniques. In the living polymerization process based on active carbanionic center, metals from Groups I and II of the periodic table are commonly used to initiate the polymerization of monomers into polymers. For example, lithium, barium, magnesium, sodium, and potassium are metals that are frequently utilized in such polymerizations. Initiator systems of this type are of commercial importance because they can be used to produce stereo regulated polymers. For instance, lithium initiators can be utilized to initiate the anionic polymerization of isoprene into synthetic polyisoprene rubber or to initiate the polymerization of 1,3-butadiene into polybutadiene rubber having the desired microstructure.

The polymers formed in such polymerizations have the metal used to initiate the polymerization at the growing end of their polymer chains and are sometimes referred to as living polymers. They are referred to as living polymers because their polymer chains which contain the terminal metal initiator continue to grow or live until all of the available monomer is exhausted. Polymers that are prepared by utilizing such metal initiators normally have structures which are essentially linear and normally do not contain appreciable amounts of branching.

This invention details synthesis of functionalized polymers. In general, to achieve the best tire performance properties functionalized polymers are highly desirable. In order to reduce the rolling resistance and to improve the tread wear characteristics of tires, functionalized elastomers having a high rebound physical property (low hysteresis) have been used for the tire tread rubber compositions. However, in order to increase the wet skid resistance of a tire tread, rubbery polymers that have a relatively lower rebound physical property (higher hysteresis) which thereby undergo a greater energy loss, have sometimes been used for such tread rubber compositions. To achieve such relatively inconsistent viscoelastic properties for the tire tread rubber compositions, blends (mixtures) of various types of synthetic and natural rubber can be utilized in tire treads.

Functionalized rubbery polymers made by living polymerization techniques are typically compounded with sulfur, accelerators, antidegradants, a filler, such as carbon black, silica or starch, and other desired rubber chemicals and are then subsequently vulcanized or cured into the form of a useful article, such as a tire or a power transmission belt. It has been established that the physical properties of such cured rubbers depend upon the degree to which the filler is homogeneously dispersed throughout the rubber. This is in turn related to the level of affinity that filler has for the particular rubbery polymer. This can be of practical importance in improving the physical characteristics of rubber articles which are made utilizing such rubber compositions. For example, the rolling resistance and traction characteristics of tires can be improved by improving the affinity of carbon black and/or silica to the rubbery polymer utilized therein. Therefore, it would be highly desirable to improve the affinity of a given rubbery polymer for fillers, such as carbon black and silica.

Marc Sleevi et al., J. Org. Chem, 1980, 45, pp. 5204-5206, describes a polymerization initiator of formula I below in which both R¹ and R² are hydrogen and in which each of R³, R⁴ and R⁵ is CH₃.

### Summary of the invention

The present invention is directed to a functionalized polymerization initiator in accordance with claim 1 or claim 2, to a method of making a functionalized polymerization initiator in accordance with claim 5, to a method of making a functionalized elastomer in accordance with claim 7, to a functionalized elastomer in accordance with claim 13, to a rubber composition in accordance with claim 14 and to a tire in accordance with claim 15.

Dependent claims refer to preferred embodiments of the invention.

In one aspect, the present invention is directed to a functionalized polymerization initiator of formula I 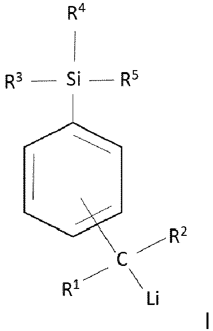
where R¹ and R² are independently selected to be a C1 to C8 alkyl; and R³, R⁴, and R⁵ are independently selected to be a C1 to C8 alkyl or a C6 to C14 aryl or a structure of formula II 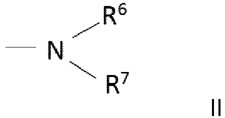
where R⁶, R⁷ are independently selected to be a C1 to C8 alkyl or a C6 to C14 aryl; or
where R¹ and R² are independently selected to be hydrogen or a C1 to C8 alkyl; and R³, R⁴, and R⁵ are independently selected to be a C6 to C14 aryl or a structure of formula II 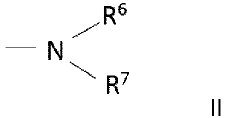
where R⁶, R⁷ are independently selected to be a C1 to C8 alkyl or a C6 to C14 aryl.

In another aspect, the invention is directed to the initiator comprising the reaction product of an alkyl lithium compound and a compound of formula III 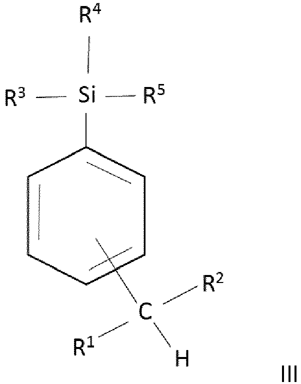 where R¹-R⁵ are as previously defined.

In yet another aspect, the invention is directed to a method of making the functionalized initiator.

In yet another aspect, the invention is directed to a method of making a functionalized elastomer using the initiator for formular I 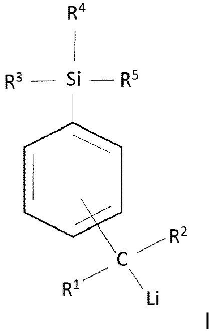 where R¹ and R² are independently selected to be hydrogen or a C1 to C8 alkyl; R³, R⁴, and R⁵ are independently selected to be a C1 to C8 alkyl or a C6 to C14 aryl or a structure of formula II 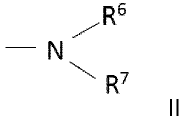 where R⁶, R⁷ are independently selected to be a C1 to C8 alkyl or a C6 to C14 aryl.

### Description of Example Embodiments of the Invention

There is disclosed a functionalized polymerization initiator, comprising the reaction product of an alkyl lithium compound and a compound of formula I 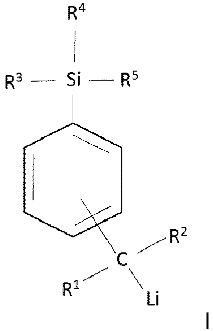
where R¹ and R² are independently selected to be a C1 to C8 alkyl; and R³, R⁴, and R⁵ are independently selected to be a C1 to C8 alkyl or a C6 to C14 aryl or a structure of formula II 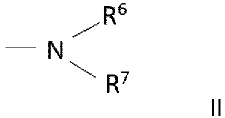
where R⁶, R⁷ are independently selected to be a C1 to C8 alkyl or a C6 to C14 aryl; or
where R¹ and R² are independently selected to be hydrogen or a C1 to C8 alkyl; and R³, R⁴, and R⁵ are independently selected to be a C6 to C14 aryl or a structure of formula II 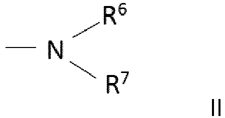
where R⁶, R⁷ are independently selected to be a C1 to C8 alkyl or a C6 to C14 aryl.

The initiator may comprise the reaction product of an alkyl lithium compound and a compound of formula III 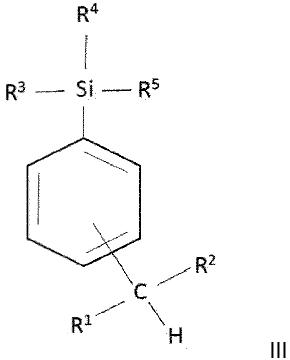 where R¹-R⁵ are as previously defined.

There is further disclosed a method of making the functionalized initiator, and a method of making a functionalized elastomer using the initiator.

In one embodiment, the functionalized initiator is represented by the compound 1 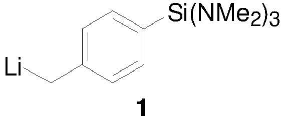 where Me is methyl.

The functional initiator can be made by reacting the compound of formula 1 with initiators having the general structural formula P-M, wherein P represents an hydrocarbyl group and wherein M represents a metal of group I or II.

The metal used in the functional initiator is typically selected from the group consisting of barium, lithium, magnesium, sodium, and potassium. Lithium and potassium are the metals that are most commonly utilized in the synthesis of metal terminated polymers (living polymers). Normally, lithium initiators are more preferred.

Organolithium compounds are the preferred initiators for utilization in preparation of the functionalized initiator. The organolithium compounds which are utilized are normally organo monolithium compounds. The organolithium compounds which are preferred are monofunctional compounds which can be represented by the formula: R-Li, wherein R represents a hydrocarbyl radical containing from 1 to 20 carbon atoms. Generally, such monofunctional organolithium compounds will contain from 1 to 10 carbon atoms. Some representative examples of preferred initiators include n-butyllithium, sec-butyllithium, n-hexyllithium, n-octyllithium, tertoctyllithium, n-decyllithium, phenyllithium, 1-naphthyllithium, 4-butylphenyllithium, p-tolyllithium, 4-phenylbutyllithium, cyclohexyllithium, 4-butylcyclohexyllithium, and 4-cyclohexylbutyllithium. Secondary-butyllithium is highly preferred.

To make the functional initiator, the compound of formula 1 is combined with an organolithium compound in a molar ratio ranging from 1:2 to 2:1 in a hydrocarbon solvent such as hexane. Polymerization modifiers such as TMEDA and the like may be added to the mixture. The mixture of compound of formula 1 and organolithium compound is then heated at a temperature ranging from 40 to 80 °C for a duration of 1 to 10 minutes to form functional initiator as the reaction product of the compound of formula 1 and the organolithium compound. The reaction product may be transferred in solution to a polymerization mixture of monomers in solvent to form a functionalized diene elastomer.

The amount of functional initiator utilized in a polymerization will vary depending upon the molecular weight which is desired for the rubbery polymer being synthesized as well as the precise polymerization temperature which will be employed. The precise amount of organolithium compound required to produce a polymer of a desired molecular weight can be easily ascertained by persons skilled in the art. However, as a general rule from 0.01 to 1 phm (parts per 100 parts by weight of monomer) of an organolithium initiator will be utilized. In most cases, from 0.01 to 0.1 phm of an organolithium initiator will be utilized with it being preferred to utilize 0.025 to 0.07 phm of the organolithium initiator.

In one embodiment, the monomers used to synthesize the functionalized elastomer include a first monomer and an optional second monomer, where the first monomer is a conjugated diene monomer and the second monomer is a vinyl aromatic monomer,

As the first monomer, suitable conjugated diene monomers include 1,3-butadiene, isoprene, 1,3-pentadiene, 2,3-dimethyl-1,3-butadiene, 2-methyl-1,3-pentadiene, 2,3-dimethyl-1,3-pentadiene, 2-phenyl-1,3-butadiene, and 4,5-diethyl-1,3-octadiene.

Also, as the second monomer, suitable vinyl aromatic monomers include styrene, 1-vinylnapthalene, 3-methylstyrene, 3,5-diethylstyrene, 4-propylstyrene, 2,4,6-trimethylstyrene, 4-dodecylstyrene, 3-methyl-5-normal-hexylstyrene, 4-phenylstyrene, 2-ethyl-4-benzylstyrene, 3,5-diphenylstyrene, 2,3,4,5-tetraethylstyrene, 3-ethyl-1-vinylnapthalene, 6-isopropyl-1-vinylnapthalene, 6-cyclohexyl-1-vinylnapthalene, 7-dodecyl-2-vinylnapthalene, and α-methylstyrene.

In a preferred embodiment, the monomers used to synthesize the copolymer include 1,3-butadiene and styrene.

The copolymer is generally prepared by solution polymerizations that utilize inert organic solvents, such as saturated aliphatic hydrocarbons, aromatic hydrocarbons, or ethers. The solvents used in such solution polymerizations will normally contain from 4 to 10 carbon atoms per molecule and will be liquids under the conditions of the polymerization. Some representative examples of suitable organic solvents include pentane, isooctane, cyclohexane, normal-hexane, benzene, toluene, xylene, ethylbenzene, tetrahydrofuran, and the like, alone or in admixture. For instance, the solvent can be a mixture of different hexane isomers. Such solution polymerizations result in the formation of a polymer cement (a highly viscous solution of the polymer).

The functionalized elastomer can be produced using either a batch or continuous anionic polymerization process. The polymerization medium can include modifiers like tetramethylethylenediamine (TMEDA), sodium mentholate (SMT), ditetrahydrofurfurylpropane (DTP), tetrahydrofuran (THF), polyethers or their combinations. Branching agents, for example divinylbenzene, silicon tetrachloride etc, can also be used during polymerization.

After the polymerization reaction is completed, it will normally be desirable to "kill" any living polydiene chains which remain. This can be accomplished by adding water, an organic acid, or an alcohol, such as methanol or ethanol, to the polymer cement after the functionalization reaction is completed in order to eliminate any living polymer. The block copolymer can then be recovered from the solution utilizing standard techniques.

The functionalized elastomer may be compounded into a rubber composition. The rubber composition may include elastomers comprising the block copolymer alone, or may include the block copolymer along with additional elastomers as described below. Generally, in a composition including the block copolymer and additional elastomers, the rubber composition may include from 95 to 5 phr of the block copolymer, and optionally from 5 to 95 phr of additional elastomers.

The rubber composition may optionally include, in addition to the functionalized polymer, one or more rubbers or elastomers containing olefinic unsaturation. The phrases "rubber or elastomer containing olefinic unsaturation" or "diene based elastomer" are intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials and such terms are well known to those having skill in the rubber mixing or rubber compounding art. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis 1,4 polybutadiene), polyisoprene (including cis 1,4 polyisoprene), butyl rubber, halobutyl rubber such as chlorobutyl rubber or bromobutyl rubber, styrene/isoprene/butadiene rubber, copolymers of 1,3 butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers are polyisoprene (natural or synthetic), polybutadiene and SBR.

In one aspect the at least one additional rubber is preferably of at least two of diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of 20 to 28 percent bound styrene or, for some applications, an E SBR having a medium to relatively high bound styrene content, namely, a bound styrene content of 30 to 45 percent.

By emulsion polymerization prepared E-SBR, it is meant that styrene and 1,3 butadiene are copolymerized as an aqueous emulsion. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

The cis 1,4-polyisoprene and cis 1,4-polyisoprene natural rubber are well known to those having skill in the rubber art.

The term "phr" as used herein, and according to conventional practice, refers to "parts by weight of a respective material per 100 parts by weight of rubber, or elastomer."

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The rubber composition may include silica, carbon black, or a combination of silica and carbon black.

The rubber composition may include from 1 to 150 phr of silica. In another embodiment, from 10 to 100 phr of silica may be used.

The commonly employed siliceous pigments which may be used in the rubber compound include conventional pyrogenic and precipitated siliceous pigments (silica). In one embodiment, precipitated silica is used. The conventional siliceous pigments employed in this invention are precipitated silicas such as, for example, those obtained by the acidification of a soluble silicate, e.g., sodium silicate.

Such conventional silicas might be characterized, for example, by having a BET surface area, as measured using nitrogen gas. In one embodiment, the BET surface area may be in the range of 40 to 600 square meters per gram. In another embodiment, the BET surface area may be in a range of 80 to 300 square meters per gram. The BET method of measuring surface area is described in the Journal of the American Chemical Society, Volume 60, Page 304 (1930).

The conventional silica may also be characterized by having a dibutylphthalate (DBP) absorption value in a range of 100 to 400, alternatively 150 to 300.

Various commercially available silicas may be used, such as, only for example herein, and without limitation, silicas commercially available from PPG Industries under the Hi-Sil trademark with designations 210 and 243; silicas available from Rhodia, with, for example, designations of Z1165MP and Z165GR; and silicas available from Degussa AG with, for example, designations VN2 and VN3. Silica pretreated or prereacted with organosilanes may also be used, such as Agilon 400 and the like from PPG.

Commonly employed carbon blacks can be used as a conventional filler in combination with silica in an amount ranging from 1 to 150 phr. In another embodiment, from 10 to 100 phr of carbon black may be used. Although carbon black may be used with silica, in one embodiment, essentially no carbon black is used except for an amount required to impart black color to the tire which is from 1 to 10 phr. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm3/100 g.

Combinations of silica and carbon black may be used in the composition. In one embodiment, the weight ratio of silica to carbon black is greater than or equal to one.

Other fillers may be used in the rubber composition including, but not limited to, particulate fillers including ultra high molecular weight polyethylene (UHMWPE), crosslinked particulate polymer gels including but not limited to those disclosed in U.S. Patents Nos. 6,242,534; 6,207,757; 6,133,364; 6,372,857; 5,395,891; or 6,127,488, and plasticized starch composite filler including but not limited to that disclosed in U.S. Patent No. 5,672,639. Such other fillers may be used in an amount ranging from 1 to 30 phr.

In one embodiment the rubber composition may contain a conventional sulfur containing organosilicon compound. In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'- bis(triethoxysilylpropyl) tetrasulfide.

In another embodiment, suitable sulfur containing organosilicon compounds include compounds disclosed in U.S. Patent No. 6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT from Momentive Performance Materials.

In another embodiment, suitable sulfur containing organosilicon compounds include those disclosed in U.S. Patent Publication No. 2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr. In one embodiment, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr, alternatively with a range of from 1.5 to 6 phr. Typical amounts of tackifier resins, if used, comprise 0.5 to 10 phr, usually 1 to 5 phr. Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4, alternatively 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. For example, the rubber component may be a tread (including tread cap and tread base), sidewall, apex, chafer, sidewall insert, wirecoat or innerliner. In one embodiment, the component is a tread.

The pneumatic tire of the present invention may be a race tire, passenger tire, aircraft tire, agricultural, earthmover, off-the-road, or truck tire. In one embodiment, the tire is a passenger or truck tire. The tire may also be a radial or bias.

Vulcanization of the pneumatic tire of the present invention is generally carried out at conventional temperatures ranging from 100°C to 200°C. In one embodiment, the vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

This invention is illustrated by the following examples. Unless specifically indicated otherwise, parts and percentages are given by weight.

### Example 1

In this example, the synthesis of a functionalized initiator comprising the reaction product of an alkyl lithium and the compound of formula 1 is illustrated. The monomer was produced using the following scheme

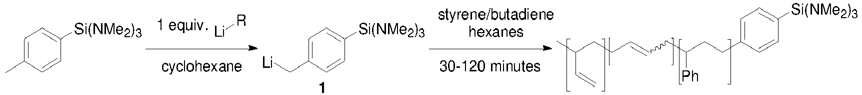

A solution of 4-(trimethylsilyl) toluene was deprotonated with sec-butyl lithium in cyclohexane at room temperature in the presence of an equivalent of modifier (TMEDA/DTP.) After reaction (~10 minutes,) the material was charged into a reactor containing monomer and hexanes. The reaction was run for 30 to 120 minutes and quenched with isopropanol (1 part) and Polystay K (1 part.) When this was done, a significant increase in Mooney viscosity (ML1+4) was observed upon finishing. Alternatively, the cement was sometimes quenched with water (1 part,) steric acid (1 part,) and Polystay K (1 part.) When this was done, the jump in Mooney was observed during termination and minimal Mooney changes were observed upon finishing. In all cases, functional SSBR with a 30-60 base Mooney was prepared that contained ~21 % vinyl and ~50% styrene. A non-functional control SSBR of similar base Mooney was also prepared.

**Table 1**

| Sample | 1 | 2 | 3 | 4 |
|---|---|---|---|---|
| Initiator¹ | n-BuLi | Cmpd 1 | Cmpd 1 | Cmpd 1 |
| Final Mooney (MU) | 44.5 | 32.1 | 58 | 122 |
| Shortstop² | A | A | A | B |
| Finished Mooney (MU) | 38 | 101 | 140 | 136 |
| T_{g} inflection (°C) | -21 | -21 | -20 | -22 |
| Styrene (wt %) | 21 | 21 | 21 | 20 |
| Vinyl (wt %) | 50 | 50 | 50 | 50 |

| | | | | |
|---|---|---|---|---|
| ¹n-butyl lithium or compound 1 ² A = isopropanol and Polystay K; B = water, stearic acid and Polystay K | | | | |

### Example 2

Four rubber compounds (Samples 5-8) corresponding to each SSBR from Example 1 were mixed with formulation as given in Table 2.

**Table 2**

| Non productive mix step | |
|---|---|
| SSBR | 70 |
| Polybutadiene | 30 |
| Oil | 20 |
| Antidegradant | 2 |
| Stearic acid | 2 |
| Waxes | 1.5 |
| Silica | 65 |
| Silane coupler | 5.2 |

| Productive mix step | |
|---|---|
| Antidegradant | 0.75 |
| Accelerators | 3.1 |
| Sulfur | 1.7 |
| Zinc oxide | 2 |

Compounds were mixed in 360 cc Haake mixer through a non-productive mix step (heat treating for 2 minutes at 160 °C) and a productive mix step. The samples were cured at 150 °C for 30 minutes.

**Table 3**

| Sample | 5 | 6 | 7 | 8 |
|---|---|---|---|---|
| SSBR Sample | 1 | 2 | 3 | 4 |

| Viscoelastic Properties¹ | | | | |
|---|---|---|---|---|
| G' at 5% (kPa) | 1569 | 1807 | 1822 | 1836 |
| G' at 10% (kPa) | 1437 | 1658 | 1675 | 1699 |
| Tanδ at 5% | 0.111 | 0.091 | 0.089 | 0.082 |
| Tanδ at 10% | 0.105 | 0.09 | 0.087 | 0.081 |

| Tensile Properties² | | | | |
|---|---|---|---|---|
| Modulus at 100% (MPa) | 2.08 | 2.88 | 2.9 | 3.15 |
| Modulus at 300% (MPa) | 7.21 | 10.28 | 11.56 | 12.67 |
| Strain at Max Elongation (%) | 455 | 359 | 363 | 346 |
| Stress at Max Elongation (MPa) | 12.7 | 12.8 | 14.6 | 14.9 |

| | | | | |
|---|---|---|---|---|
| ¹Rubber process analyzer (RPA) data was collected at 100 °C. ²Tensile data was collected at ambient temperature. | | | | |

The cured samples were tested for various physical properties as given in Table 3. Compared to the non-functional control (Sample 5), the Samples 6-8 including the functional polymer shows enhanced G' and Tanδ.

## Claims

1. A functionalized polymerization initiator of formula I 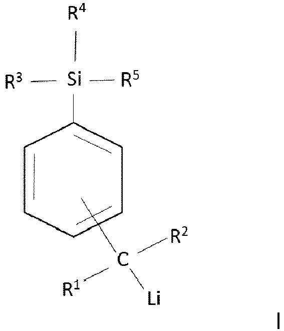
where R¹ and R² are independently selected to be a C1 to C8 alkyl; and R³, R⁴, and R⁵ are independently selected to be a C1 to C8 alkyl or a C6 to C14 aryl or a structure of formula II 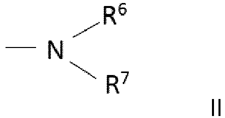
where R⁶, R⁷ are independently selected to be a C1 to C8 alkyl or a C6 to C14 aryl; or
where R¹ and R² are independently selected to be hydrogen or a C1 to C8 alkyl; and R³, R⁴, and R⁵ are independently selected to be a C6 to C14 aryl or a structure of formula II 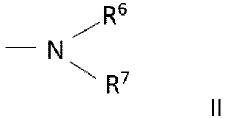
where R⁶, R⁷ are independently selected to be a C1 to C8 alkyl or a C6 to C14 aryl.

2. A functionalized polymerization initiator comprising the reaction product of an alkyl lithium compound and a compound of formula III 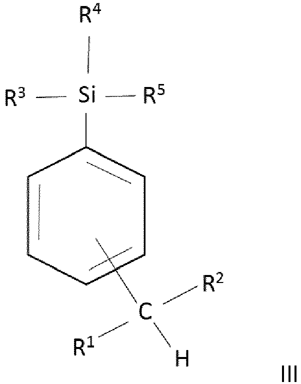
where R¹ and R² are independently selected to be a C1 to C8 alkyl; and R³, R⁴, and R⁵ are independently selected to be a C1 to C8 alkyl or a C6 to C14 aryl or a structure of formula II 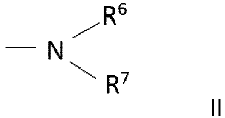
where R⁶, R⁷ are independently selected to be a C1 to C8 alkyl or a C6 to C14 aryl; or
where R¹ and R² are independently selected to be hydrogen or a C1 to C8 alkyl; and R³, R⁴, and R⁵ are independently selected to be a C6 to C14 aryl or a structure of formula II 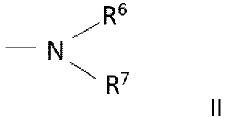
where R⁶, R⁷ are independently selected to be a C1 to C8 alkyl or a C6 to C14 aryl.

3. The functionalized polymerization initiator of claim 1, wherein the initiator is of formula 1 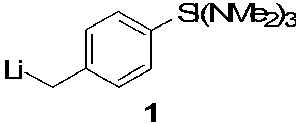 where Me is methyl.

4. The functionalized polymerization initiator of at least one of the previous claims, wherein the alkyl lithium compound is selected from the group consisting of n-butyllithium, sec-butyllithium, n-hexyllithium, n-octyllithium, tertoctyllithium, n-decyllithium, phenyllithium, 1-naphthyllithium, 4-butylphenyllithium, p-tolyllithium, 4-phenylbutyllithium, cyclohexyllithium, 4-butylcyclohexyllithium, and 4-cyclohexylbutyllithium.

5. A method of making a functionalized polymerization initiator, the method comprising the step of reacting an alkyl lithium compound in a hydrocarbon solvent with a compound of formula III 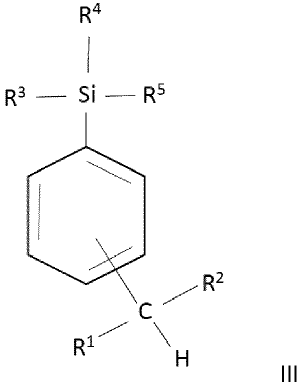
where R¹ and R² are independently selected to be a C1 to C8 alkyl; and R³, R⁴, and R⁵ are independently selected to be a C1 to C8 alkyl or a C6 to C14 aryl or a structure of formula II 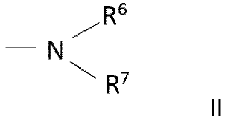
where R⁶, R⁷ are independently selected to be a C1 to C8 alkyl or a C6 to C14 aryl; or
where R¹ and R² are independently selected to be hydrogen or a C1 to C8 alkyl; and R³, R⁴, and R⁵ are independently selected to be a C6 to C14 aryl or a structure of formula II 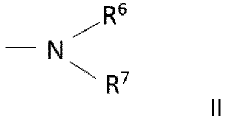
where R⁶, R⁷ are independently selected to be a C1 to C8 alkyl or a C6 to C14 aryl.

6. The method of claim 5, wherein the alkyl lithium compound is selected from the group consisting of n-butyllithium, sec-butyllithium, n-hexyllithium, n-octyllithium, tertoctyllithium, n-decyllithium, phenyllithium, 1-naphthyllithium, 4-butylphenyllithium, p-tolyllithium, 4-phenylbutyllithium, cyclohexyllithium, 4-butylcyclohexyllithium, and 4-cyclohexylbutyllithium.

7. A method of making a functionalized elastomer, the method comprising the step of polymerizing at least one conjugated diene monomer and optionally an aromatic vinyl monomer in the presence of a functionalized polymerization initiator of formula I 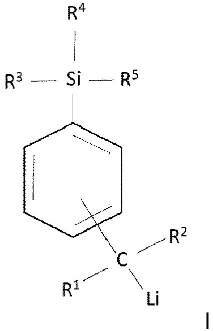
where R¹ and R² are independently selected to be hydrogen or a C1 to C8 alkyl; R³, R⁴, and R⁵ are independently selected to be a C1 to C8 alkyl or a C6 to C14 aryl or a structure of formula II 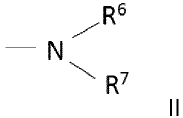
where R⁶, R⁷ are independently selected to be a C1 to C8 alkyl or a C6 to C14 aryl.

8. The method of claim 5 or 7, wherein the initiator is of formula 1 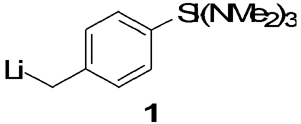 where Me is methyl.

9. The method of claim 7 or 8, wherein prior to the polymerizing step, the reaction product of the alkyl lithium compound and the compound of formula 1 is formed by the step of reacting the alkyl lithium compound in a hydrocarbon solvent with the compound of formula 1, and, optionally, further comprising the step of adding the at least one diene monomer and optionally the aromatic vinyl monomer after the step of forming the reaction product of the alkyl lithium compound and the compound of formula 1.

10. The method of at least one of the claims 7 to 9, wherein the conjugated diene monomer is selected from the group consisting of 1,3-butadiene, isoprene, 1,3-pentadiene, 2,3-dimethyl-1,3-butadiene, 2-methyl-1,3-pentadiene, 2,3-dimethyl-1,3-pentadiene, 2-phenyl-1,3-butadiene, and 4,5-diethyl-1,3-octadiene.

11. The method of at least one of the claims 7 to 10, wherein the vinyl aromatic monomer is selected from the group consisting of styrene, 1-vinylnapthalene, 3-methylstyrene, 3,5-diethylstyrene, 4-propylstyrene, 2,4,6-trimethylstyrene, 4-dodecylstyrene, 3-methyl-5-normal-hexylstyrene, 4-phenylstyrene, 2-ethyl-4-benzylstyrene, 3,5-diphenylstyrene, 2,3,4,5-tetraethylstyrene, 3-ethyl-1-vinylnapthalene, 6-isopropyl-1-vinylnapthalene, 6-cyclohexyl-1-vinylnapthalene, 7-dodecyl-2-vinylnapthalene, and α-methylstyrene.

12. The method of at least one of the claims 7 to 11, wherein the alkyl lithium compound is selected from the group consisting of n-butyllithium, sec-butyllithium, n-hexyllithium, n-octyllithium, tertoctyllithium, n-decyllithium, phenyllithium, 1-naphthyllithium, 4-butylphenyllithium, p-tolyllithium, 4-phenylbutyllithium, cyclohexyllithium, 4-butylcyclohexyllithium, and 4-cyclohexylbutyllithium.

13. A functionalized elastomer made by the method of at least one of the claims 7 to 12.

14. A rubber composition comprising the functionalized elastomer of claim 13 and optionally further comprising silica.

15. A pneumatic tire comprising the rubber composition of claim 14.

## Patentansprüche

1. Funktionalisierter Polymerisationsinitiator der Formel I 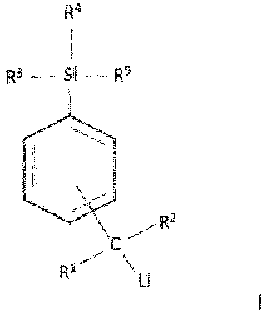
worin R¹ und R² unabhängig voneinander ausgewählt sind, um ein C1 - bis C8-Alkyl zu sein; und R³, R⁴ und R⁵ unabhängig voneinander ausgewählt sind, um ein C1 - bis C8-Alkyl oder ein C6- bis C14-Aryl oder eine Struktur der Formel II zu sein 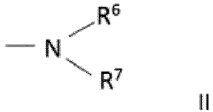
worin R⁶ und R⁷ unabhängig voneinander ausgewählt sind, um ein C1- bis C8-Alkyl oder ein C6- bis C14-Aryl zu sein;
oder
worin R¹ und R² unabhängig voneinander ausgewählt sind, um Wasserstoff oder ein C1- bis C8-Alkyl zu sein; und R³, R⁴ und R⁵ unabhängig voneinander ausgewählt sind, um ein C6- bis C14-Aryl oder eine Struktur der Formel II zu sein 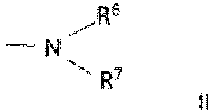
worin R⁶ und R⁷ unabhängig voneinander ausgewählt sind, um ein C1- bis C8-Alkyl oder ein C6- bis C14-Aryl zu sein.

2. Funktionalisierter Polymerisationsinitiator, der das Reaktionsprodukt einer Alkyllithiumverbindung und einer Verbindung der Formel III umfasst 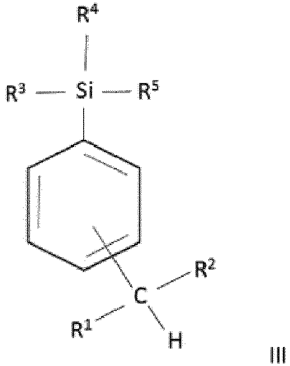
worin R1 und R2 unabhängig voneinander ausgewählt sind, um ein C1 - bis C8-Alkyl zu sein; und R³, R⁴ und R⁵ unabhängig voneinander ausgewählt sind, um ein C1 - bis C8-Alkyl oder ein C6- bis C14-Aryl oder eine Struktur der Formel II zu sein 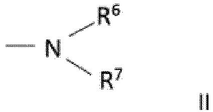
worin R⁶ und R⁷ unabhängig voneinander ausgewählt sind, um ein C1- bis C8-Alkyl oder ein C6- bis C14-Aryl zu sein;
oder
worin R¹ und R² unabhängig voneinander ausgewählt sind, um Wasserstoff oder ein C1- bis C8-Alkyl zu sein; und R³, R⁴ und R⁵ unabhängig voneinander ausgewählt sind, um ein C6- bis C14-Aryl oder eine Struktur der Formel II zu sein 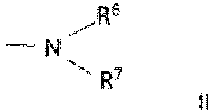
worin R⁶ und R⁷ unabhängig voneinander ausgewählt sind, um ein C1- bis C8-Alkyl oder ein C6- bis C14-Aryl zu sein.

3. Funktionalisierter Polymerisationsinitiator nach Anspruch 1, wobei der Initiator der Formel 1 ist 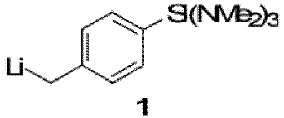 worin Me Methyl ist.

4. Funktionalisierter Polymerisationsinitiator nach mindestens einem der vorhergehenden Ansprüche, wobei die Alkyllithiumverbindung ausgewählt ist aus der Gruppe bestehend aus n-Butyllithium, sec-Butyllithium, n-Hexyllithium, n-Octyllithium, tert-octyllithium, n-Decyllithium, Phenyllithium, 1-Naphthyllithium, 4-Butylphenyllithium, p-Tolyllithium, 4-Phenylbutyllithium, Cyclohexyllithium, 4-Butylcyclohexyllithium und 4-Cyclohexylbutyllithium.

5. Verfahren zur Herstellung eines funktionalisierten Polymerisationsinitiators, wobei das Verfahren den Schritt der Umsetzung einer Alkyllithiumverbindung in einem Kohlenwasserstofflösungsmittel mit einer Verbindung der Formel III umfasst 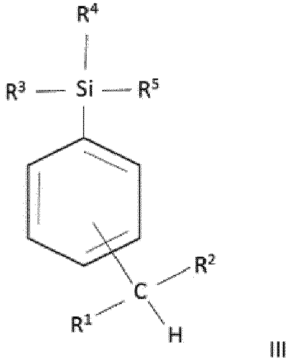
worin R¹ und R² unabhängig voneinander ausgewählt sind, um ein C1 - bis C8-Alkyl zu sein; und R³, R⁴ und R⁵ unabhängig voneinander ausgewählt sind, um ein C1 - bis C8-Alkyl oder ein C6- bis C14-Aryl oder eine Struktur der Formel II zu sein 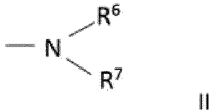
worin R⁶ und R⁷ unabhängig voneinander ausgewählt sind, um ein C1- bis C8-Alkyl oder ein C6- bis C14-Aryl zu sein;
oder
worin R¹ und R² unabhängig voneinander ausgewählt sind, um Wasserstoff oder ein C1- bis C8-Alkyl zu sein; und R³, R⁴ und R⁵ unabhängig voneinander ausgewählt sind, um ein C6- bis C14-Aryl oder eine Struktur der Formel II zu sein 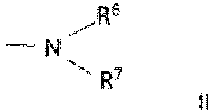
worin R⁶, R⁷ unabhängig voneinander ausgewählt sind, um ein C1- bis C8-Alkyl oder ein C6- bis C14-Aryl zu sein.

6. Verfahren nach Anspruch 5, wobei die Alkyllithiumverbindung ausgewählt ist aus der Gruppe bestehend aus n-Butyllithium, sec-Butyllithium, n-Hexyllithium, n-Octyllithium, Tert-octyllithium, n-Decyllithium, Phenyllithium, 1-Naphthyllithium, 4-Butylphenyllithium, Ptolyllithium, 4-Phenylbutyllithium, Cyclohexyllithium, 4-Butylcyclohexyllithium und 4-Cyclohexylbutyllithium.

7. Verfahren zur Herstellung eines funktionalisierten Elastomers, wobei das Verfahren den Schritt der Polymerisation von mindestens einem konjugierten Dienmonomer und optional einem aromatischen Vinylmonomer in Gegenwart eines funktionalisierten Polymerisationsinitiators der Formel I umfasst 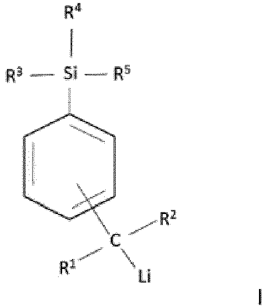
worin R¹ und R² unabhängig voneinander ausgewählt sind, um Wasserstoff oder ein C1- bis C8-Alkyl zu sein; R³, R⁴ und R⁵ unabhängig voneinander ausgewählt sind, um ein C1- bis C8-Alkyl oder ein C6- bis C14-Aryl oder eine Struktur der Formel II zu sein 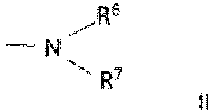
worin R⁶ und R⁷ unabhängig voneinander ausgewählt sind, um ein C1- bis C8-Alkyl oder ein C6- bis C14-Aryl zu sein.

8. Verfahren nach Anspruch 5 oder 7, wobei der Initiator der Formel 1 ist 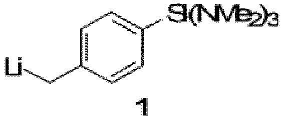 worin Me für Methyl steht.

9. Verfahren nach Anspruch 7 oder 8, wobei vor dem Polymerisationsschritt das Reaktionsprodukt aus der Alkyllithiumverbindung und der Verbindung der Formel 1 durch den Schritt des Umsetzens der Alkyllithiumverbindung in einem Kohlenwasserstofflösungsmittel mit der Verbindung der Formel 1 gebildet wird, und optional weiterhin den Schritt der Zugabe des mindestens einen Dienmonomers und optional des aromatischen Vinylmonomers nach dem Schritt der Bildung des Reaktionsprodukts aus der Alkyllithiumverbindung und der Verbindung der Formel 1 umfasst.

10. Verfahren nach mindestens einem der Ansprüche 7 bis 9, wobei das konjugierte Dienmonomer aus der Gruppe ausgewählt ist, die aus 1,3-Butadien, Isopren, 1,3-Pentadien, 2,3-Dimethyl-1,3-butadien, 2-Methyl-1,3-pentadien, 2,3-Dimethyl-1,3-pentadien, 2-Phenyl-1,3-butadien und 4,5-Diethyl-1,3-octadien besteht.

11. Verfahren nach mindestens einem der Ansprüche 7 bis 10, wobei das vinylaromatische Monomer aus der Gruppe ausgewählt ist, die aus Styrol, 1-Vinylnaphthalin, 3-Methylstyrol, 3,5-Diethylstyrol, 4-Propylstyrol, 2,4,6-Trimethylstyrol, 4-Dodecylstyrol, 3-Methyl-5-normalhexylstyrol, 4-Phenylstyrol, 2-Ethyl-4-benzylstyrol, 3,5-Diphenylstyrol, 2,3,4,5-Tetraethylstyrol, 3-Ethyl-1-vinylnapthalin, 6-Isopropyl-1-vinylnapthalin, 6-Cyclohexyl-1-vinylnapthalin, 7-Dodecyl-2-vinylnapthalin und α-Methylstyrol besteht.

12. Verfahren nach mindestens einem der Ansprüche 7 bis 11, wobei die Alkyllithiumverbindung aus der Gruppe ausgewählt ist, die aus n-Butyllithium, sec-Butyllithium, n-Hexyllithium, Noctyllithium, tert-octyllithium, n-decyllithium, Phenyllithium, 1-Naphthyllithium, 4-Butylphenyllithium, p-Tolyllithium, 4-Phenylbutyllithium, Cyclohexyllithium, 4-Butylcyclohexyllithium und 4-Cyclohexylbutyllithium besteht.

13. Funktionalisiertes Elastomer, das nach dem Verfahren von mindestens einem der Ansprüche 7 bis 12 hergestellt wird.

14. Kautschukzusammensetzung, die das funktionalisierte Elastomer nach Anspruch 13 umfasst und die optional weiterhin Siliciumdioxid umfasst.

15. Luftreifen, der die Gummizusammensetzung nach Anspruch 14 umfasst.

## Revendications

1. Initiateur de polymérisation fonctionnalisé répondant à la formule I 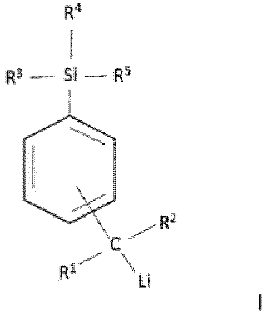
dans laquelle R¹ et R² sont choisis, de manière indépendante, de manière à représenter un groupe alkyle en C₁-C₈ ; et R³, R⁴ et R⁵ sont choisis, de manière indépendante, de manière à représenter un groupe alkyle en C₁-C₈ ou un groupe aryle en C₆-C₁₄ ou une structure répondant à la formule II 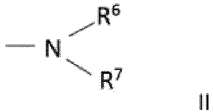
dans laquelle R⁶, R⁷ sont choisis, de manière indépendante, de manière à représenter un groupe alkyle en C₁-C₈ ou un groupe aryle en C₆-C₁₄;
ou
dans laquelle R¹ et R² sont choisis, de manière indépendante, de manière à représenter un atome d'hydrogène ou un groupe alkyle en C₁-C₈ ; et R³, R⁴ et R⁵ sont choisis, de manière indépendante, de manière à représenter un groupe aryle en C₆-C₁₄ ou une structure répondant à la formule II 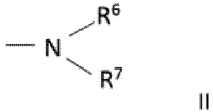
dans laquelle R⁶, R⁷ sont choisis, de manière indépendante, de manière à représenter un groupe alkyle en C₁-C₈ ou un groupe aryle en C₆-C₁₄.

2. Initiateur de polymérisation fonctionnalisé qui comprend le produit réactionnel d'un composé d'alkyllithium et d'un composé répondant à la formule III 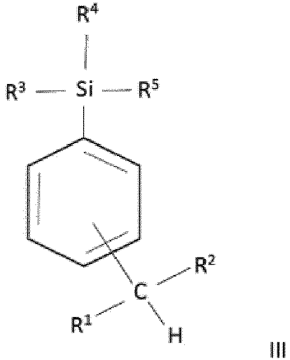
dans laquelle R¹ et R² sont choisis, de manière indépendante, de manière à représenter un groupe alkyle en C₁-C₈ ; et R³, R⁴ et R⁵ sont choisis, de manière indépendante, de manière à représenter un groupe alkyle en C₁-C₈ ou un groupe aryle en C₆-C₁₄ ou une structure répondant à la formule II 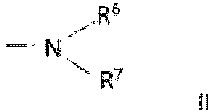
dans laquelle R⁶, R⁷ sont choisis, de manière indépendante, de manière à représenter un groupe alkyle en C₁-C₈ ou un groupe aryle en C₆-C₁₄;
ou
dans laquelle R¹ et R² sont choisis, de manière indépendante, de manière à représenter un atome d'hydrogène ou un groupe alkyle en C₁-C₈ ; et R³, R⁴ et R⁵ sont choisis, de manière indépendante, de manière à représenter un groupe aryle en C₆-C₁₄ ou une structure répondant à la formule II 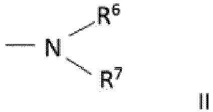
dans laquelle R⁶, R⁷ sont choisis, de manière indépendante, de manière à représenter un groupe alkyle en C₁-C₈ ou un groupe aryle en C₆-C₁₄.

3. Initiateur de polymérisation fonctionnalisé selon la revendication 1, dans lequel l'initiateur répond à la formule 1 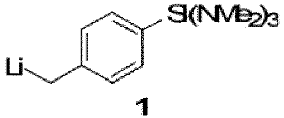 dans laquelle Me représente un groupe méthyle.

4. Initiateur de polymérisation fonctionnalisé selon au moins une des revendications précédentes, dans lequel le composé d'alkyllithium est choisi parmi le groupe constitué par le n-butyllithium, le sec-butyllithium, le n-hexyllithium, le n-octyllithium, le tert-octyllithium, le n-décyllithium, le phényllithium, le 1-naphtyllithium, le 4-butylphényllithium, le p-tolyllithium, le 4-phénylbutyllithium, le cyclohexyllithium, le 4-butylcyclohexyllithium et le 4-cyclohexylbutyllithium.

5. Procédé de préparation d'un initiateur de polymérisation fonctionnalisé, dans lequel le procédé comprend l'étape dans laquelle on fait réagir un composé d'alkyllithium dans un solvant d'hydrocarbure avec un composé répondant à la formule III 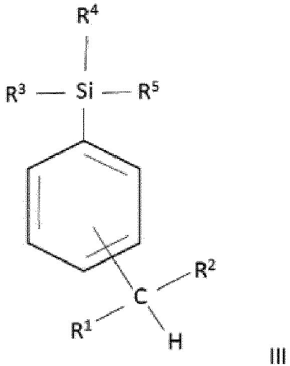
dans laquelle R¹ et R² sont choisis, de manière indépendante, de manière à représenter un groupe alkyle en C₁-C₈ ; et R³, R⁴ et R⁵ sont choisis, de manière indépendante, de manière à représenter un groupe alkyle en C₁-C₈ ou un groupe aryle en C₆-C₁₄ ou une structure répondant à la formule II 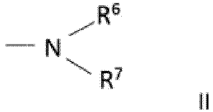
dans laquelle R⁶, R⁷ sont choisis, de manière indépendante, de manière à représenter un groupe alkyle en C₁-C₈ ou un groupe aryle en C₆-C₁₄;
ou
dans laquelle R¹ et R² sont choisis, de manière indépendante, de manière à représenter un atome d'hydrogène ou un groupe alkyle en C₁-C₈ ; et R³, R⁴ et R⁵ sont choisis, de manière indépendante, de manière à représenter un groupe aryle en C₆-C₁₄ ou une structure répondant à la formule II 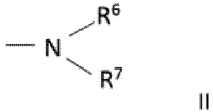
dans laquelle R⁶, R⁷ sont choisis, de manière indépendante, de manière à représenter un groupe alkyle en C₁-C₈ ou un groupe aryle en C₆-C₁₄.

6. Procédé selon la revendication 5, dans lequel le composé d'alkyllithium est choisi parmi le groupe constitué par le n-butyllithium, le sec-butyllithium, le n-hexyllithium, le n-octyllithium, le tert-octyllithium, le n-décyllithium, le phényllithium, le 1-naphtyllithium, le 4-butylphényllithium, le p-tolyllithium, le 4-phénylbutyllithium, le cyclohexyllithium, le 4-butylcyclohexyllithium et le 4-cyclohexylbutyllithium.

7. Procédé de préparation d'un élastomère fonctionnalisé, dans lequel le procédé comprend l'étape dans laquelle on polymérise au moins un monomère diénique conjugué et de manière facultative un monomère vinylaromatique en présence d'un initiateur de polymérisation fonctionnalisé répondant à la formule I 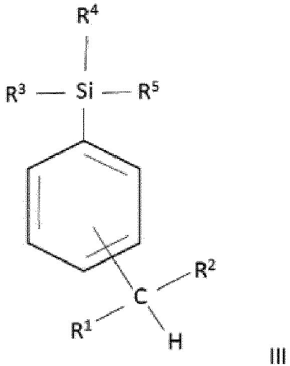
dans laquelle R¹ et R² sont choisis, de manière indépendante, de manière à représenter un atome d'hydrogène ou un groupe alkyle en C₁-C₈ ; et R³, R⁴ et R⁵ sont choisis, de manière indépendante, de manière à représenter un groupe alkyle en C₁-C₈ ou un groupe aryle en C₆-C₁₄ ou une structure répondant à la formule II 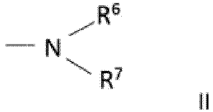
dans laquelle R⁶, R⁷ sont choisis, de manière indépendante, de manière à représenter un groupe alkyle en C₁-C₈ ou un groupe aryle en C₆-C₁₄;

8. Procédé selon la revendication 5 ou 7, dans lequel l'initiateur répond à la formule 1 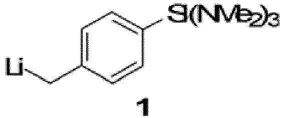 dans laquelle Me représente un groupe méthyle.

9. Procédé selon la revendication 7 ou 8, dans lequel, avant l'étape de polymérisation, on prépare le produit réactionnel du composé d'alkyllithium et du composé répondant à la formule 1 par l'intermédiaire de l'étape dans laquelle on fait réagir le composé d'alkyllithium dans un solvant d'hydrocarbure avec le composé répondant à la formule 1, et, de manière facultative, qui comprend en outre l'étape dans laquelle on ajoute ledit au moins un monomère diénique et de manière facultative le monomère vinylaromatique après l'étape de préparation du produit réactionnel du composé d'alkyllithium et du composé répondant à la formule 1.

10. Procédé selon au moins une des revendications 7 à 9, dans lequel le monomère diénique conjugué est choisi parmi le groupe constitué par le 1,3-butadiène, l'isoprène, le 1,3-pentadiène, le 2,3-diméthyl-1,3-butadiène, le 2-méthyl-1,3-pentadiène, le 2,3-diméthyl-1,3-pentadiène, le 2-phényl-1,3-butadiène et le 4,5-diéthyl-1,3-octadiène.

11. Procédé selon au moins une des revendications 7 à 10, dans lequel le monomère vinylaromatique est choisi parmi le groupe constitué par le styrène, le 1-vinylnaphtalène, le 3-méthylstyrène, le 3,5-diéthylstyrène, le 4-propylstyrène, le 2,4,6-triméthylstyrène, le 4-dodécylstyrène, le 3-méthyl-5-n-hexylstyrène, le 4-phénylstyrène, le 2-éthyl-4-benzylstyrène, le 3,5-diphénylstyrène, le 2,3,4,5-tétraéthylstyrène, le 3-éthyl-1-vinylnaphtalène, le 6-isopropyl-1-vinylnaphtalène, le 6-cyclohexyl-1-vinylnaphtalène, le 7-dodécyl-2-vinylnaphtalène et l'a-méthylstyrène.

12. Procédé selon au moins une des revendications 7 à 11, dans lequel le composé d'alkyllithium est choisi parmi le groupe constitué par le par le n-butyllithium, le sec-butyllithium, le n-hexyllithium, le n-octyllithium, le tert-octyllithium, le n-décyllithium, le phényllithium, le 1-naphtyllithium, le 4-butylphényllithium, le p-tolyllithium, le 4-phénylbutyllithium, le cyclohexyllithium, le 4-butylcyclohexyllithium et le 4-cyclohexylbutyllithium.

13. Élastomère fonctionnalisé préparé par l'intermédiaire du procédé selon au moins une des revendications 7 à 12.

14. Composition de caoutchouc qui comprend l'élastomère fonctionnalisé selon la revendication 13 et, de manière facultative, qui comprend en outre de la silice.

15. Bandage pneumatique qui comprend la composition de caoutchouc selon la revendication 14.
